# EUROPÄISCHE PATENTSCHRIFT

(11) **EP 1 210 895 B1**
(45) Veröffentlichungstag und Bekanntmachung des Hinweises auf die Patenterteilung: **22.06.2005**
(21) Anmeldenummer: 01128558.2
(22) Anmeldetag: 30.11.2001
(51) Int. Cl.: A47J 36/08

(54) **An einem Behältnis, insbesondere einer Pfanne zu befestigender Siebaufsatz**
Strainer attachable to a container,in particular to a pan
Passoire fixable sur un récipient, notamment une casserole

(30) Priorität: 04.12.2000 DE 20020610 U
(43) Veröffentlichungstag der Anmeldung: 05.06.2002
(73) Patentinhaber: Novotech Ltd., St. Peter Port Guernsey GY1 3ZG (GB)
(72) Erfinder: Schütz, Alfred, 3052 Zollikofen (CH)
(74) Vertreter: Hebing, Norbert, Dipl.-Phys.

(56) Entgegenhaltungen:
- US-A- 1 241 448
- US-A- 1 953 338
- US-A- 2 133 724
- US-A- 3 289 849

## Beschreibung

Die Neuerung betrifft einen an einem Behältnis, insbesondere einer Pfanne zu befestigenden Siebaufsatz, welcher einen mit Sieböffnungen versehenen, das Behältnis teilweise abdeckenden Sektorbereich hat, der an seiner bogenförmigen Peripherie Haltemittel zum Übergreifen des Randes des Behältnisses aufweist und über dessen der bogenförmigen Peripherie entgegengesetztem, rückwärtigem Rand ein symmetrisch zu der Peripherie ausgerichteter, gegen die Kraft einer Feder radial zur Peripherie verschiebbarer Schieber angeordnet ist, der seinerseits Haltemittel zum Übergreifen des Randes des Behältnisses an der den übrigen Haltemitteln gegenüberliegenden Seite aufweist und nahe dessen sektorbereichsseitigem Ende die Feder angreift, wobei der Schieber durch einen von dem Sektorbereich wegführenden Haltebereich parallel zur Ebene des Sektorbereiches gehalten ist. Solcher Siebaufsatz ist aus US-A-1 953 338 bekannt.

Ein Siebaufsatz der vorstehenden Art ist seit langem auf dem Markt erhältlich und wird insbesondere dazu verwendet, ein Behältnis teilweise abdecken zu können, damit man aus dem Behältnis Flüssigkeit gießen kann, ohne dass dabei in dem Behältnis bereitetes Gut, beispielsweise Makkaroni, mit aus ihm herausfällt und ohne dass man dabei den Siebeinsatz mit der Hand festhalten muss. Zur Anbringung des Siebaufsatzes hakt man diesen mit seiner bogenförmigen Peripherie bei einer Pfanne über ihren Rand und zieht dann den Schieber so weit vom Rand weg, bis er an der gegenüberliegenden Seite des Siebaufsatzes am Rand der Pfanne eingehakt werden kann. Bei der Handhabung des Siebaufsatzes hält man diesen üblicherweise am freien Ende seines Schiebers fest.

Da der Schieber und seine Haltebereiche, welche als V-förmige Stege ausgebildet sind, eine beträchtliche Elastizität aufweisen, legt sich das sektorbereichsseitige Ende des Schiebers gegen die Ebene des Sektorbereiches, wenn man den Siebaufsatz horizontal in Gebrauchslage hält. Trägt man ihn jedoch am freien Ende des Schiebers mit seiner unteren Seite nach oben, dann federt das freie Ende des Schiebers aus der Ebene des Sektorbereiches heraus, was zu einer beträchtlichen Beanspruchung der Feder und teilweise sogar zu einer Beschädigung der Feder führt. Hierbei ist zu bedenken, dass die Haltebereiche als flache Stege auf den sektorförmigen Bereich aufgenietet sind, so dass der auf diesen Stegen aufliegende und von ihnen geführte Schieber im Sektorbereich ohnehin einen der Dicke der Stege entsprechenden Abstand von der Ebene des Sektorbereiches hat, was ein Verbiegen der Feder begünstigt.

Der Neuerung liegt das Problem zugrunde, einen Siebaufsatz der eingangs genannten Art so zu gestalten, dass seine Feder auch bei ungeschickter Handhabung des Siebaufsatzes nicht überbeansprucht und dadurch beschädigt oder zerstört wird.

Dieses Problem wird neuerungsgemäß dadurch gelöst, dass die Feder zusätzlich zur Erzeugung einer radialen Kraft auf den Schieber zum Erzeugen einer quer zur Ebene des Sektorbereiches zu dem Sektorbereich hin gerichteten Kraft auf das den Sektorbereich greifende freie Ende des Schiebers ausgebildet ist.

Durch diese Gestaltung der Feder wird vermieden, dass der Schieber beim horizontalen Halten des Siebaufsatzes mit seiner Unterseite nach oben Abstand von der Ebene des Sektorbereiches bekommt und dadurch die Feder quer zu ihrer Haupterstreckungsrichtung verbiegt, so dass eine Überbeanspruchung und damit Beschädigung der Feder vermieden wird. Da der Schieber gemäß der neuerungsgemäßen Gestaltung sowohl im Bereich des freien Endes des Haltebereiches gegen diesen Haltebereich als auch mit seinem freien Ende gegen den Sektorbereich anliegt, ist er an zwei Stellen abgestützt, so dass er keine Wippe bildet und deshalb bei normaler Handhabung des Siebaufsatzes kräftemäßig eine Einheit mit dem Sektorbereich bildet.

Die den Schieber im Bereich seines freien Endes gegen den Sektorbereich vorspannende Kraft lässt sich auf einfache Weise dadurch erzeugen, dass gemäß einer vorteilhaften Weiterbildung der Neuerung die Feder im Bereich des freien Endes des Schiebers eine über 360° führende Schlaufe aufweist, welche mit ihrer dem freien Ende des Schiebers zugewandten Seite mit dem Schieber verbunden ist und diesen in Richtung der Ebene des Sektorbereiches vorspannt. Diese Ausführungsform bietet zusätzlich den Vorteil, dass der Schieber relativ weit radial zu dem Sektorbereich verschoben werden kann, ohne dass hierzu die erforderlichen Kräfte zum Überwinden der Gegenkraft der Feder unerwünscht stark ansteigen. Deshalb ist die Ausbildung einer solchen Schlaufe auch dann vorteilhaft, wenn man auf die quer zur Ebene des Sektorbereiches gerichtete Kraft verzichten will.

Der Schieber liegt vollflächig über seine den Sektorbereich und den Haltebereich überdeckende Länge gegen den Sektorbereich und den Haltebereich an, so dass er mit dem übrigen Teil des Siebaufsatzes eine besonders stabile Einheit bildet, wenn gemäß einer anderen Weiterbildung der Neuerung der Haltebereich durch einen Vorsprung des Sektorbereiches gebildet ist und deshalb mit dem Sektorbereich eine ebene Fläche bildet.

Die Feder kann sehr einfach und gänzlich ohne Werkzeug montiert und erforderlichenfalls gegen eine neue ausgetauscht werden, wenn die beiden Befestigungspunkte jeweils durch eine aus der Ebene des Sektorbereiches vorspringende Lasche gebildet sind und die Feder an ihren beiden freien Enden jeweils eine haarklammerförmige Umbiegung zum lösbaren Verrasten innerhalb der jeweiligen Lasche aufweist. Überraschenderweise zeigte sich, dass durch die Verrastung der Feder innerhalb der Laschen die Feder über ihre gesamte Länge auf dem Sektorbereich aufliegt, so dass dadurch auch der Schieber sicher gegen den Sektorbereich anliegt.

Besonders einfach ist die Montage und das Austauschen der Feder, wenn gemäß einer anderen Weiterbildung der Neuerung die Umbiegung ein freies, außenseitig über den Rand der jeweiligen Lasche greifendes Federende hat.

Die Neuerung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine Draufsicht auf die Unterseite des neuerungsgemäßen Siebaufsatzes,
- Fig.2: eine Seitenansicht des Siebaufsatzes,
- Fig.3: eine Draufsicht auf eine Feder des Siebaufsatzes.

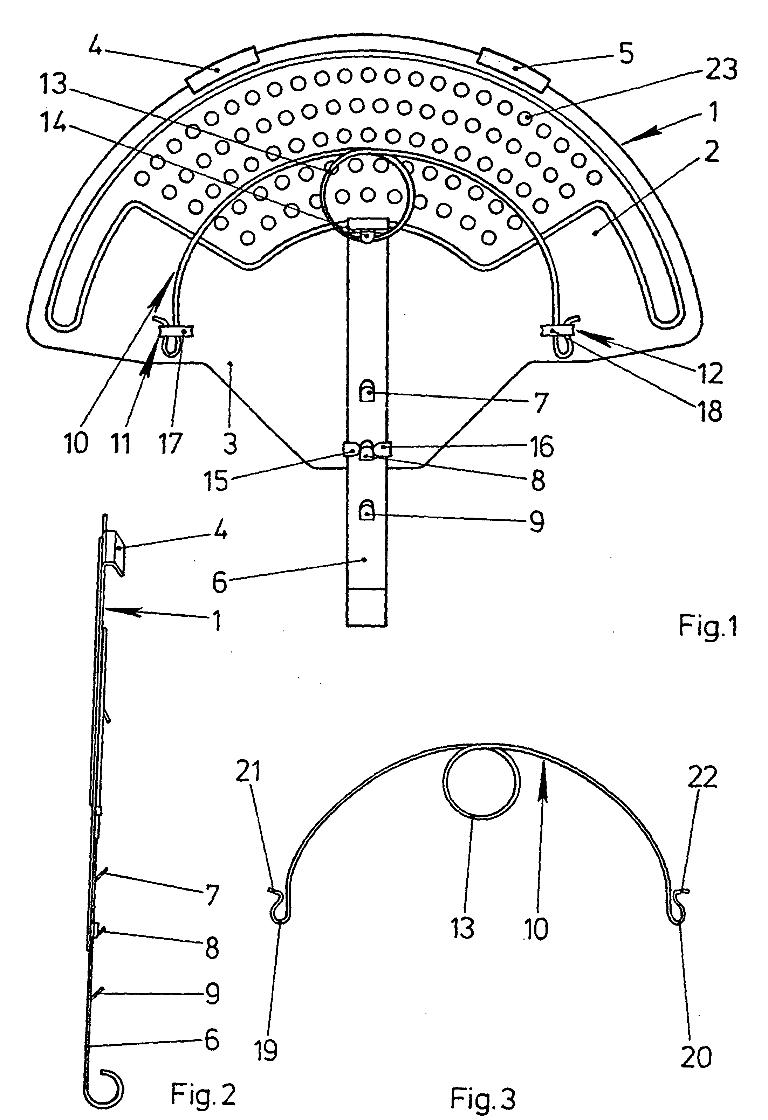

Wie die Figur 1 zeigt, besteht der neuerungsgemäße Siebaufsatz aus einem Grundkörper 1, welcher aus einem in etwa einen Halbkreis bildenden Sektorbereich 2 und einem daran angeformten, trapezförmigen Haltebereich 3 besteht. An der Peripherie des Sektorbereiches 2 sind Haltemittel 4, 5 angeformt, welche zum Übergreifen des Randes eines nicht gezeigten Behältnisses ausgebildet sind.

Auf dem Sektorbereich 2 und dem Haltebereich 3 liegt ein symmetrisch zum Sektorbereich 2 ausgerichteter Schieber 6 mit seinem vorderen Bereich auf. Dieser Schieber 6 hat zueinander beabstandet drei weitere Haltemittel 7, 8, 9. Der Schieber 6 und diese Haltemittel 7, 8, 9 sind so bemessen, dass je nach dem Durchmesser des benutzten Behältnisses, auf welchem der Siebaufsatz aufgesetzt wird und je nach dem, wie weit man den Schieber 6 relativ zu dem Sektorbereich 2 radial nach außen verschiebt, eines dieser Haltemittel 7, 8, 9 an der den Haltemitteln 4, 5 gegenüberliegende Seite über den Rand des Behältnisses zu greifen vermag und dadurch den Siebaufsatz auf dem Behältnis fixiert.

Wichtig für die Neuerung ist eine Feder 10, welche zwischen zwei Befestigungspunkten 11, 12 des Sektorbereiches 2 gespannt ist und die im mittleren Bereich eine kreisförmige Schlaufe 13 hat, über die der Schieber 6 nahe seines freien Endes mit einem Vorsprung 14 greift. Auf diese Weise wird der Schieber 6 von der Feder 10 in Richtung der Peripherie des Sektorbereiches 2 und gleichzeitig zur Ebene des Grundkörpers 1 hin vorgespannt. Die beiden Befestigungspunkte 11, 12 sind jeweils durch eine Lasche 17, 18 gebildet, die aus der Ebene des Sektorbereiches 2 heraus ragt.

Am Haltebereich 3 wird der Schieber 6 teilweise von zwei Führungsvorsprüngen 15, 16 umgriffen, die ein radiales Verschieben des Schiebers 6 ermöglichen, zugleich jedoch den Schieber 6 in der dargestellten, den Sektorbereich 2 maximal überdeckenden Position begrenzen, also einen Anschlag für den Schieber 6 bilden.

Die Figur 2 verdeutlicht, dass der Schieber 6 mit seinem vorderen Bereich plan auf dem Grundkörper 1 aufliegt. Weiterhin sind in Figur 2 die Haltemittel 4, 7, 8, 9 zu erkennen, mit denen der Siebaufsatz am Rand eines Behältnisses zu befestigen ist. Hat man den Siebaufsatz auf diese Weise auf einem Behältnis befestigt, dann kann man aus dem Behältnis Flüssigkeit durch in Figur 1 gezeigte Sieböffnungen 23 abgießen, ohne dass man hierzu den Siebaufsatz mit der Hand festhalten muss.

Die Figur 3 zeigt die Feder 10 als Einzelteil. Zu erkennen ist, dass an ihren beiden Enden jeweils ein haarnadelförmige Umbiegung 19, 20 vorgesehen ist und dass die Feder 10 mit einem in etwa radial nach außen gerichteten Ende 21, 22 abschließt. Durch diese Gestaltung kann man jeweils eine der Umbiegungen 19, 20 unter die jeweilige Lasche 17 oder 18 schieben, so dass sie sich dort zu verrasten vermag.

### Bezugszeichenliste

- 1: Grundkörper
- 2: Sektorbereich
- 3: Haltebereich
- 4: Haltemittel
- 5: Haltemittel

- 6: Schieber
- 7: Haltemittel
- 8: Haltemittel
- 9: Haltemittel
- 10: Feder

- 11: Befestigungspunkt
- 12: Befestigungspunkt
- 13: Schlaufe
- 14: Vorsprung
- 15: Führungsvorsprung

- 16: Führungsvorsprung
- 17: Lasche
- 18: Lasche
- 19: Umbiegung
- 20: Umbiegung

- 21: Ende
- 22: Ende
- 23: Sieböffnung

## Patentansprüche

1. An einem Behältnis, insbesondere einer Pfanne zu befestigender Siebaufsatz (1), welcher einen mit Sieböffnungen (23) versehenen, das Behältnis teilweise abdeckenden Sektorbereich (2) hat, der an seiner bogenförmigen Peripherie Haltemittel (4, 5) zum Übergreifen des Randes des Behältnisses aufweist und über dessen der bogenförmigen Peripherie entgegengesetztem, rückwärtigem Rand ein symmetrisch zu der Peripherie ausgerichteter, gegen die Kraft einer Feder (10) radial zur Peripherie verschiebbarer Schieber (6) angeordnet ist, der seinerseits Haltemittel (7, 8, 9) zum Übergreifen des Randes des Behältnisses an der den übrigen Haltemitteln (4, 5) gegenüberliegenden Seite aufweist und nahe dessen sektorbereichsseitigem Ende die Feder (10) angreift, wobei der Schieber (6) durch einen von dem Sektorbereich wegführenden Haltebereich (3) parallel zur Ebene des Sektorbereiches gehalten ist, **dadurch gekennzeichnet, dass** die Feder (10) zusätzlich zur Erzeugung einer radialen Kraft auf den Schieber (6) zum Erzeugen einer quer zur Ebene des Sektorbereiches (2) zu dem Sektorbereich (2) hin gerichteten Kraft auf das Sektorbereichsseitige Ende des Schiebers (6) ausgebildet ist.

2. Siebaufsatz nach Anspruch 1, bei dem die Feder von zwei äußeren Befestigungspunkten (11, 12) des Sektorbereiches zu dem freien Ende des Schiebers führt, **dadurch gekennzeichnet, dass** die Feder (10) im Bereich des freien Endes des Schiebers (6) eine über 360° führende Schlaufe (13) aufweist, welche mit ihrer dem freien Ende des Schiebers (6) zugewandten Seite mit dem Schieber (6) verbunden ist und diesen in Richtung der Ebene des Sektorbereiches (2) vorspannt.

3. Siebaufsatz nach den Ansprüchen 1 oder 2, **dadurch gekennzeichnet, dass** der Haltebereich (3) durch einen Vorsprung des Sektorbereiches (2) gebildet ist und deshalb mit dem Sektorbereich (2) eine ebene Fläche bildet.

4. Siebaufsatz nach zumindest einem der vorangehenden Ansprüche, **dadurch gekennzeichnet, dass** die beiden Befestigungspunkte (11, 12) jeweils durch eine aus der Ebene des Sektorbereiches (2) vorspringende Lasche (17, 18) gebildet sind und die Feder (10) an ihren beiden freien Enden jeweils eine haarklammerförmige Umbiegung (19, 20) zum lösbaren Verrasten innerhalb der jeweiligen Lasche (17, 18) aufweist.

5. Siebaufsatz nach Anspruch 4, **dadurch gekennzeichnet, dass** die Umbiegung (19, 20) ein freies, außenseitig über den Rand der jeweiligen Lasche (17, 18) greifendes Federende (21, 22) hat.

## Claims

1. Strainer attachment (1) for fastening to a receptacle and especially to a pan, with a sector region (2) partially covering the receptacle and provided with strainer openings (23) which has holding means (4, 5) on its arcuate periphery intended to reach over the rim of the receptacle and across whose rear edge opposite the arcuate periphery a slider (6) aligned symmetrically with respect to the periphery is arranged so as to be displaceable radially with respect to the periphery against the force of a spring (10), the said slider (6): itself having holding means (7, 8, 9) intended to reach over the rim of the receptacle on the opposite side to the other holding means (4, 5); engaging the spring (10) at a point near to the sector-region end of the slider; and being held parallel with the plane of the sector region by a holding region leading away from the sector region, **characterized in that** the spring (10) is configured so that in addition to exerting a radial force on the slider (6) it exerts a force directed transversely with respect to the plane of the sector region (2) and towards the sector region (2) on the sector-region end of the slider (6).

2. Strainer attachment according to Claim 1 in which the spring leads from two outer attachment points (11, 12) on the sector region to the free end of the slider, **characterized in that,** in the region of the free end of the slider (6), the spring (10) has a 360° loop (13) which is connected to the slider (6) on the side of the loop (13) towards the free end of the slider (6), and urges the slider (6) towards the plane of the sector region (2).

3. Strainer attachment according to Claim 1 or Claim 2, **characterized in that** the holding region (3) is formed by a projection of the sector region (2) and thus forms a single plane surface with the sector region (2).

4. Strainer attachment according to at least one of the preceding claims, **characterized in that** each of the two attachment points (11, 12) is formed by a strap (17, 18) projecting from the plane of the sector region (2) and each of the two free ends of the spring (10) has a hairpin bend (19, 20) for releasable snap-fastening within the respective strap (17, 18).

5. Strainer attachment according to Claim 4, **characterized in that the bend** (19, 20) in the spring has a free end (21, 22) reaching outwards beyond the edge of the respective strap (17, 18).

## Revendications

1. Couvercle-passoire (1) à fixer sur un récipient, en particulier une poêle, lequel couvercle-passoire comporte une région sectorielle (2) qui est dotée d'ouvertures de passoire (23), qui recouvre partiellement le récipient, qui comporte à sa périphérie incurvée des moyens de retenue (4, 5) s'engageant par-dessus le bord du récipient et dont le bord arrière, opposé à la périphérie incurvée reçoit par-dessus lui un coulisseau (6) qui est orienté symétriquement à la périphérie, qui est apte à se déplacer radialement par rapport à la périphérie en s'opposant à la force d'un ressort (10) et qui comporte d'une part des moyens de retenue (7, 8, 9) s'engageant par-dessus le bord du récipient du côté opposé aux autres moyens de retenue (4, 5) et s'engageant avec le ressort (10) près de son extrémité du côté du bord sectoriel, le coulisseau (6) étant maintenu par une région de retenue partant de la région sectorielle (3) parallèlement au plan de la région sectorielle, **caractérisé en ce que** le ressort (10) est conformé sur l'extrémité du coulisseau (6) du côté de la région sectorielle (2) pour générer une force dirigée transversalement au plan de la région sectorielle (2) en plus d'une force radiale sur le coulisseau (6).

2. Couvercle-passoire selon la revendication 1, dans lequel le ressort va de deux points de fixation extérieurs (11, 12) de la région sectorielle à l'extrémité libre du coulisseau, **caractérisé en ce que** le ressort (10) comporte dans la région de l'extrémité libre du coulisseau (6) une boucle (13) s'étendant sur 360° qui est reliée au coulisseau (6) par son côté dirigé vers l'extrémité libre du coulisseau (6) et le précontraint en direction du plan de la région sectorielle (2).

3. Couvercle-passoire selon la revendication 1 ou 2, **caractérisé en ce que** la région de retenue (3) est formée par une saillie de la région sectorielle (2) et forme ainsi avec la région sectorielle (2) une surface plane.

4. Couvercle-passoire selon au moins une des revendications précédentes, **caractérisé en ce que** les deux points de fixation (11, 12) sont formés chacun par une attache (17, 18) saillant du plan de la région sectorielle (2) et **en ce que** le ressort (10) comporte à chacune de ses deux extrémités libres un coude (19, 20) en forme de pince à cheveu qui est destiné à s'encliqueter de façon amovible à l'intérieur de l'attache respective (17, 18).

5. Couvercle-passoire selon la revendication 4, **caractérisé en ce que** le coude (19, 20) comporte une extrémité élastique (21, 22) s'engageant du côté extérieur par-dessus le bord de l'attache respective (17, 18).
